# EUROPEAN PATENT SPECIFICATION

(11) **EP 1 167 130 B1**
(45) Date of publication and mention of the grant of the patent: **22.10.2003**
(21) Application number: 01110348.8
(22) Date of filing: 26.04.2001
(51) Int. Cl.: B60R 21/20, F16L 13/14

(54) **Air-bag**
Airbag
Airbag

(30) Priority: 21.06.2000 GB 0015240
(43) Date of publication of application: 02.01.2002
(73) Proprietor: Autoliv Development AB, 447 83 Vargarda (SE)
(72) Inventor: Lorenz, Andreas, 85221 Dachau (DE); Miller, Bernd, 99077 Ulm (DE)
(74) Representative: Frankland, Nigel Howard

(56) References cited:
- EP-A- 0 791 776
- EP-A- 0 797 037
- DE-A- 19 731 563
- DE-U- 29 916 177
- US-A- 5 518 275

## Description

**THE PRESENT INVENTION** relates to an air-bag, and more particularly relates to an air-bag to be mounted in a motor vehicle to provide protection for an occupant of the vehicle in the event that an accident should occur. Such an air-bag is known from DE 29 916 177 U.

Many different designs of air-bag have been proposed previously to be mounted in motor vehicles. Some air-bags utilise a rigid gas duct to form a gas supply duct for gas from a gas generator. Thus the gas supply duct directs gas, from the gas generator, to the interior of the air-bag.

Typically the part of the gas duct within the air-bag has a relatively small diameter whereas the gas generator typically has a relatively large diameter. It is thus necessary to provide an appropriate connection between the gas duct and the gas generator.

Various prior proposals have been made. One solution presently utilised in an air-bag in the form of an inflatable side curtain supplied for the Audi A4 motor car utilises a sheet metal element which surrounds the gas supply duct and the gas generator, this metal element having components connected together with a large number of rivets.

It is to be understood that any connector must be capable of withstanding the relatively high pressures that are generated when the gas generator is actuated, typically in response to a signal from a sensor when an accident situation is detected by the sensor.

The present invention seeks to provide an improved air-bag.

According to one aspect of this invention there is provided an air-bag provided with a rigid gas duct to form a gas supply duct for gas from a gas generator, the gas duct having an adapter to connect the gas duct to the gas generator, the adapter having a first end with a first diameter that receives part of the gas duct, and a second end with a greater diameter to be connected to the gas generator, and an intermediate section in which the diameter increases from the diameter of the first end to the diameter of the second end, an end part of the gas duct being located in the intermediate section, that end part of the gas duct being enlarged, as compared with the rest of the gas duct, so that the outer surface of the end portion of the gas duct lies adjacent the inner surface of the intermediate section of the adapter.

Preferably the outer surface of the end part of the gas duct and the inner surface of the intermediate section of the adapter are provided with inter-engaging means which prevent relative rotation.

Conveniently the outer surface of the end part of the gas duct and the inner surface of the first end of the adapter are provided with inter-engaging means which prevent relative rotation.

In one embodiment the inter-engaging means comprise a crimped section, but preferably the inter-engaging means comprise grooves formed in the gas duct and in the intermediate section of the adapter.

Advantageously the gas duct is adhered to the intermediate section of the adapter.

Conveniently a gas generator is connected to the second end of the adapter.

The invention also relates to a method of making an air-bag as described above, the method including the steps of inserting the end of the gas duct into the adapter and pressing the end of the gas duct in the adapter with a tool that enlarges the end part of the gas duct.

Preferably the tool has one or more projections on its outer surface and the method includes the step of forming grooves in the end part of the gas duct and the adjacent part of the adapter with the projections.

Conveniently the method includes the step of providing adhesive between the gas duct and the adapter.

In order that the invention may be more readily understood, and so that further features thereof may be appreciated, the invention will now be described, by way of example, with reference to the accompanying drawings in which:
FIGURE 1 is a diagrammatic side view of an adapter connected to a gas generator, and also connected to a gas duct, to form a gas supply duct for an air-bag, and
FIGURE 2 is a sectional view of the adapter, and the gas generator shown in Figure 1.

Referring initially to the accompanying drawings, a rigid tubular gas duct 1 is provided which is to form a gas supply duct for gas from a gas generator to the interior of an air-bag shown, in phantom, as air-bag 2. The air-bag may be in the form of a so-called "inflatable curtain" which is adapted, when inflated, to lie adjacent the interior side windows of a motor vehicle.

An end part of the rigid gas supply duct 1 is shown inserted into an adapter 3. The adapter 3 is a generally tubular element, and may be formed of metal or the like. The adapter 3 has a first end portion 4, which is of generally uniform cross-section, the internal diameter of this first section 4 being substantial equal to the exterior diameter of the gas duct 1. The adapter 3 has an intermediate section 5 where the diameter of the adapter 3 increases from the diameter of the first end section 4 to a greater diameter, which is the diameter of a second end section 6. The end section 6 is separated from the end section 4 by means of the intermediate section 5. The end section has a diameter such that a tubular body 7 of a gas generator 8 may be inserted into the open end of the second end portion 6 of the adapter 3. The body 7 may be provided with a peripheral groove 9, and a crimping 10 may secure the gas generator in position.

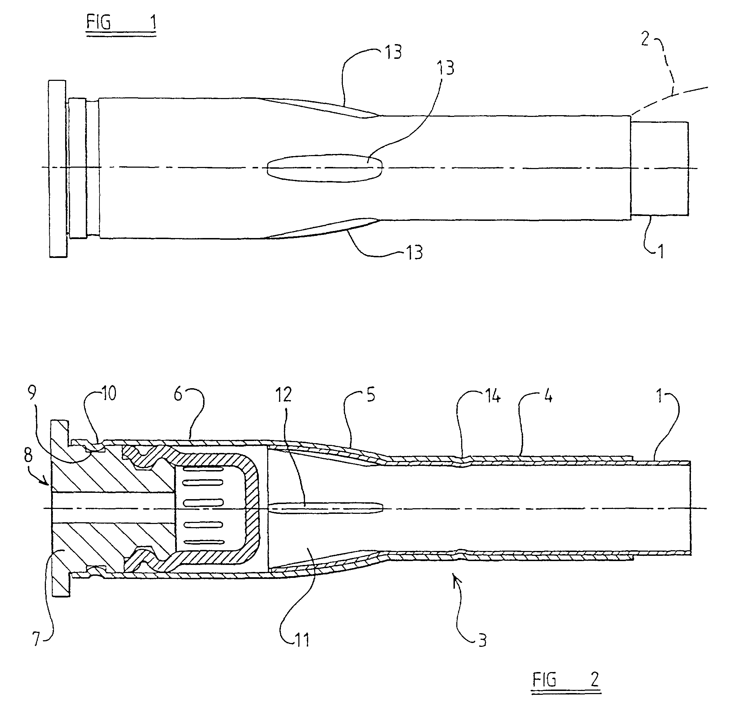

It is to be appreciated that, before the gas generator is located in position, an end region 11 of the rigid gas duct 1, which is located within the intermediate section 5 of the adapter 3 is enlarged, so as to have a larger diameter than the rest of the gas duct 1. This may be accomplished by inserting, into the end of the gas duct, whilst it is located within the intermediate section 5 of the adapter 3, a frusto conical tool. The tool is inserted with a pressing action. The tool may be provided with one or more elongate projections on the exterior surface thereof so that the tool consequently forms grooves 12 in the enlarged end portion 11 of the rigid gas duct 1, and also corresponding grooves in the intermediate portion of the adapter 3. The grooves, 12, extend axially of the adapter 3 and are visible, in Figure 1, as projections 13 present on the exterior of the adapter. The grooves formed in the end part 11 of the gas duct 1 and the grooves formed in the intermediate section of the adapter 3 inter-engage, thereby preventing relative rotation between the gas duct 1 and the adapter 3.

Adhesive may, if desired, be provided on the exterior of the end part 11 of the gas duct 1, thus serving adhere the end part 11 of the gas duct 1 to the interior of the intermediate section 5 of the adapter 3.

It is to be understood that when the gas generator 8 is actuated, high pressure gas will emerge from the gas generator, but that high pressure gas will serve to reinforce the connection between the end part 11 of the gas duct 1, and the intermediate region of the adapter 3.

In an alternative embodiment of the invention a part of the intermediate section 5 is crimped into engagement with the exterior of the enlarged end part 11 of the gas duct 1, thus providing inter-engaging means to prevent relative rotation between the gas duct 1 and the adapter 3.

In a further alternative embodiment of the invention a part of the first end portion 4 is crimped 14 into engagement with the exterior of the gas duct 1, thus providing inter-engaging means to prevent relative rotation between the gas duct 1 and the adapter 3.

In the present specification "comprise" means "includes or consists of" and "comprising" means "including or consisting of'.

## Claims

1. An air-bag provided with a rigid gas duct (1) to form a gas supply duct for gas from a gas generator (8), the gas duct (1) having an adapter (3) to connect the gas duct (1) to the gas generator (8), the adapter (3) having a first end (4) with a first diameter that receives part of the gas duct (1), and a second end (6) with a greater diameter to be connected to the gas generator (8), and an intermediate section (5) in which the diameter increases from the diameter of the first end (4) to the diameter of the second end (6), an end part (11) of the gas duct (1) being located in the intermediate section (5), that end part (11) of the gas duct (1) being enlarged, as compared with the rest of the gas duct (1), so that the outer surface of the end portion (11) of the gas duct (1) lies adjacent the inner surface of the intermediate section (5) of the adapter (3).

2. An air-bag according to Claim 1 wherein the outer surface of the end part (11) of the gas duct (1) and the inner surface of the intermediate section (5) of the adapter (3) are provided with inter-engaging means (12, 13) which prevent relative rotation.

3. An airbag according to any one of the preceding claims wherein the outer surface of the end part (11) of the gas duct (1) and the inner surface of the first end (4) of the adapter (3) are provided with inter-engaging means (14) which prevent relative rotation.

4. An air-bag according to any one of Claims 2 or 3 wherein the inter-engaging means (12, 13; 14) comprise a crimped section.

5. An air-bag according to Claim 2 wherein the inter-engaging means comprise grooves (12, 13) formed in the gas duct (1) and in the intermediate section (5) of the adapter (3).

6. An air-bag according to any one of the preceding claims wherein the gas duct (1) is adhered to the intermediate section (5) of the adapter (3).

7. An air-bag according to any one of the preceding Claims comprising gas generator (8) connected to the second end (6) of the adapter (3).

8. A method of making an air-bag according to Claim 1 including the steps of inserting the end (11) of the gas duct (1) into the adapter (3) and pressing the end of the gas duct (1) in the adapter (3) with a tool that enlarges the end part (11) of the gas duct (1).

9. A method according to Claim 6 wherein the tool has one or more projections on its outer surface and the method includes the step of forming grooves (12) in the end part (11) of the gas duct (1) and the adjacent part of the adapter (3) with the projections (13).

10. A method according to Claim 6 or 7 including the step of providing adhesive between the gas duct (1) and the adapter (3).

## Patentansprüche

1. Airbag, der eine starre Gasleitung (1) aufweist, die eine Gaszuführungsleitung für Gas von einem Gasgenerator (8) bildet, wobei die Gasleitung (1) einen Adapter (13) aufweist, um die Gasleitung (1) mit dem Gasgenerator (8) zu verbinden, wobei der Adapter (3) ein erstes Ende (4) mit einem ersten Durchmesser aufweist, der einen Teil der Gasleitung (1) aufnimmt, und ein zweites Ende (6) mit einem größeren Durchmesser, das mit dem Gasgenerator (8) zu verbinden ist, und einen mittleren Abschnitt (5), in dem der Durchmesser von dem Durchmesser des ersten Endes (4) bis zu dem Durchmesser des zweiten Endes (6) zunimmt, wobei ein Endabschnitt (11) der Gasleitung (1) in dem mittleren Abschnitt (5) angeordnet ist, und wobei dieser Endabschnitt (11) der Gasleitung (1) vergrößert ist, im Vergleich mit dem übrigen Teil der Gasleitung (1), so daß die äußere Oberfläche des Endabschnitts (11) der Gasleitung (1) benachbart zu der inneren Oberfläche des mittleren Abschnitts (5) des Adapters (3) liegt.

2. Airbag nach Anspruch 1, **dadurch gekennzeichnet, daß** die äußere Oberfläche des Endabschnitts (11) der Gasleitung (1) und die innere Oberlfäche des mittleren Abschnitts (5) des Adapters (3) mit miteinander zusammenwirkenden Mitteln (12, 13) versehen sind, die eine relative Drehung verhindern.

3. Airbag nach einem der vorangehenden Ansprüche, **dadurch gekennzeichnet, daß** die äußere Oberfläche des Endabschnitts (11) der Gasleitung (1) und die innere Oberfläche des ersten Endes (4) des Adapters (3) mit miteinander zusammenwirkenden Mitteln (14) versehen sind, die eine relative Drehung verhindern.

4. Airbag nach einem der Ansprüche 2 oder 3, **dadurch gekennzeichnet, daß** die miteinander zusammenwirkenden Mittel (12, 13; 14) einen eingedrückten Abschnitt aufweisen.

5. Airbag nach Anspruch 2, **dadurch gekennzeichnet, daß** miteinander zusammenwirkenden Mittel Nuten (12, 13) aufweisen, die in der Gasleitung (1) und in dem mittleren Abschnitt (5) des Adapters (3) ausgebildet sind.

6. Airbag nach einem der vorangehenden Ansprüche, **dadurch gekennzeichnet, daß** die Gasleitung (1) an dem mittleren Abschnitt (5) des Adapters (3) angeklebt ist.

7. Airbag nach einem der vorangehenden Ansprüche, **dadurch gekennzeichnet, daß** ein Gasgenerator (8) mit dem zweiten Ende (6) des Adapters (3) verbunden ist.

8. Verfahren zum Herstellen eines Airbags nach Anspruch 1, mit den Schritten, daß das Ende (11) der Gasleitung (1) in den Adapter (3) eingefügt wird und das Ende der Gasleitung (1) in dem Adapter (3) mit einem Werkzeug gepreßt wird, das den Endabschnitt (11) der Gasleitung (1) erweitert.

9. Verfahren nach Anspruch 6, **dadurch gekennzeichnet, daß** das Werkzeug einen oder mehrere Vorsprünge auf seiner äußeren Oberfläche aufweist, wobei das Verfahren den Schritt umfaßt, daß Nuten (12) in dem Endabschnitt (11) der Gasleitung (1) und in dem benachbarten Abschnitt des Adapters (3) mit den Vorsprüngen (13) gebildet werden.

10. Verfahren nach Anspruch 6 oder 7, **dadurch gekennzeichnet, daß** es den Schritt umfaßt, daß ein Klebstoff zwischen der Gasleitung (1) und dem Adapter (3) angeordnet wird.

## Revendications

1. Un sac de sécurité gonflable muni d'un conduit à gaz (1) rigide pour former un conduit d'alimentation en gaz pour du gaz provenant d'un générateur à gaz (8), le conduit à gaz (1) comportant un adaptateur (3) pour connecter le conduit à gaz (1) au générateur à gaz (8), l'adaptateur (3) ayant une première extrémité (4) d'un premier diamètre, recevant une partie du conduit à gaz (1), et une deuxième extrémité (6) d'un plus grand diamètre, devant être connectée au générateur à gaz (8), et une section intermédiaire (5) dans laquelle le diamètre augmente, passant du diamètre de la première extrémité (4) au diamètre de la deuxième extrémité (6), une partie d'extrémité (11) du conduit à gaz (1) étant placée dans la section intermédiaire (5), cette partie d'extrémité (11) du conduit à gaz (1) étant agrandie en comparaison du reste du conduit à gaz (5), de manière que la surface extérieure de la partie d'extrémité (11) du conduit à gaz (1) soit située de façon adjacente à la surface intérieure de la section intermédiaire (5) de l'adaptateur (3).

2. Un sac de sécurité gonflable selon la revendication 1, dans lequel la surface extérieure de la partie d'extrémité (11) du conduit à gaz (1) et la surface intérieure de la section intermédiaire (5) de l'adaptateur (3) sont pourvues de moyens de mise en prise mutuelle (12, 13), empêchant toute rotation relative.

3. Un sac de sécurité gonflable selon l'une quelconque des revendications précédentes, dans lequel la surface extérieure de la partie d'extrémité (11) du conduit à gaz (1) et la surface intérieure de la première extrémité (4) de l'adaptateur (3) sont pourvues de moyens de mise en prise mutuelle (14), empêchant toute rotation relative.

4. Un sac de sécurité gonflable selon l'une des revendications 2 ou 3, dans lequel les moyens de mise en prise (12, 13; 14) comprennent une section sertie.

5. Un sac de sécurité gonflable selon la revendication 2, dans lequel les moyens. de mise en prise mutuelle comprennent des gorges (12, 13) formées dans le conduit à gaz (1) et dans la section intermédiaire (5) de l'adaptateur (3).

6. Un sac de sécurité gonflable selon l'une quelconque des revendications précédentes, dans lequel le conduit à gaz (1) est mis en adhésion sur la section intermédiaire (5) de l'adaptateur (3).

7. Un sac de sécurité gonflable selon l'une quelconque des revendications précédentes, comprenant un générateur à gaz (8) connecté à la deuxième extrémité (6) de l'adaptateur (3).

8. Un procédé de fabrication d'un sac de sécurité gonflable selon la revendication 1, comprenant les étapes consistant à insérer l'extrémité (11) du conduit à gaz (1) dans l'adaptateur (3) et presser l'extrémité du conduit à gaz (1) dans l'adaptateur (3) avec un outil agrandissant la partie d'extrémité (11) du conduit à gaz (1).

9. Un procédé selon la revendication 6, dans lequel l'outil présente une ou plusieurs saillies sur sa surface extérieure et le procédé comprend l'étape de formage de gorges (12) dans la partie d'extrémité (11) du conduit à gaz (1) et dans la partie adjacente de l'adaptateur (3), à l'aide des saillies (13).

10. Un procédé selon la revendication 6 ou 7, comprenant l'étape de fourniture d'adhésif entre le conduit à gaz (1) et l'adaptateur (7).
